# EUROPEAN PATENT SPECIFICATION

(11) **EP 3 646 442 B1**
(45) Date of publication and mention of the grant of the patent: **23.07.2025**
(21) Application number: 18727185.3
(22) Date of filing: 14.05.2018
(51) Int. Cl.: H02K 3/487, H02K 15/00, H02K 3/52

(54) **SLOT WEDGES FOR A STATOR OF AN ELECTRICAL GENERATOR**
NUTKEILE FÜR EINEN STATOR EINES ELEKTRISCHEN GENERATORS
CALES D'ENCOCHE POUR STATOR D'UN GÉNÉRATEUR ÉLECTRIQUE

(30) Priority: 31.07.2017 DE 102017213191
(43) Date of publication of application: 06.05.2020
(73) Proprietor: Siemens Gamesa Renewable Energy A/S, 7330 Brande (DK)
(72) Inventor: AZAR, Ziad, Sheffield S10 4ED (GB); THOMAS, Arwyn, Cheshire SK8 6HW (GB)
(74) Representative: SGRE-Association
(86) International application number: PCT/EP2018/062292
(87) International publication number: WO 2019/025044

(56) References cited:
- WO-A1-2016/136384
- JP-U- S5 512 745
- JP-U- S59 173 453
- US-A- 2 283 146
- US-A- 3 519 862
- US-A- 4 264 835
- US-A1- 2013 049 520
- US-A1- 2014 175 935
- US-A1- 2015 076 933
- US-B1- 6 188 158

## Description

### Field of invention

The present invention relates to a wedge for a stator of an electrical generator. Particularly, but not exclusively, the present invention may be efficiently applied to an electrical permanent magnet generator of a wind turbine.

### Art Background

An electrical generator, such as an electric generator installed in a wind turbine, typically comprises a rotor which rotates relative to a stator.

The stator normally comprises a frame body longitudinally extending along a longitudinal axis and including a stator yoke and a plurality of teeth protruding according to a radial direction from the stator yoke to respective tooth radial ends. Each tooth extends also longitudinally between a first tooth longitudinal end and a second tooth longitudinal end. In the stator a plurality of slots are also defined, each slot being delimited circumferentially by two adjacent teeth and radially extending between the stator yoke and the respective tooth radial ends. Each slot houses a respective winding and a wedge. The wedges are provided at the tooth radial ends for protecting and keeping in place the respective windings.

End plates are provided at the teeth longitudinal ends for mechanically supporting the stator lamination and in particular the teeth. Such end plates have a typical finger shape for following the shape of the stator teeth.

Main inconveniences of the above described design are:
- the finger end plates are expensive to manufacture,
- eddy-current losses in the finger end plates determine a lower efficiency (in particular a lower AEP, Annual Energy Production).

The prior art (for example US 6188158 B1) discloses wedges having main wings for respectively abutting against at least a first tooth and a second tooth, i.e. wedges having a T-shape at their longitudinal ends. Such solution may be improved in terms of coupling between the wedges and the teeth.

Therefore, there is still a need to provide an improved design for a stator of an electrical generator, which in particular permits to avoid the use of the finger end plates and at the same time to provide the necessary mechanical support for the teeth of the stator.

### Summary of the invention

This need may be met by the subject matter according to the independent claim. Advantageous embodiments of the present invention are described by the dependent claims.

According to the present invention a wedge for a stator comprises a plurality of teeth and comprises at least a first portion and a second portion transversally protruding from the first portion, the first portion and the second portion being shaped and dimensioned in such a way that, when the wedge is attached to one of the tooth radial ends, the first portion extends longitudinally from one of the first tooth longitudinal end and the second tooth longitudinal end towards the other of the first tooth longitudinal end and the second tooth longitudinal end and the second portion abuts against said one of the first tooth longitudinal end and the second tooth longitudinal end. The first portion is dimensioned in order to circumferentially extend from a first tooth of the plurality of teeth to a second tooth of the plurality of teeth, the first tooth and the second tooth being circumferentially adjacent, and the second portion being dimensioned in order to longitudinally abut against both the first tooth and the second tooth. The second portion comprises two main wings for respectively abutting against the first tooth and the second tooth, the second portion comprising two further wings, respectively attached to each of the main wings, for respectively abutting against the first tooth and the second tooth.

Furthermore, it is provided a stator for an electrical generator comprising:
- a frame body longitudinally extending along a longitudinal axis of the stator and including a stator yoke and a plurality of teeth protruding according to a radial direction orthogonal to the longitudinal axis from the stator yoke to respective tooth radial ends, each tooth extending longitudinally between a first tooth longitudinal end and a second tooth longitudinal end, and
- at least a wedge according to the present invention.

The above described electric generator including the stator of the present invention may be advantageously integrated in a wind turbine.

Advantageously, the proposed wedge of the stator, by providing mechanical support to the stator teeth at their radial ends, efficiently avoid the use of any finger end plate. In particular eddy-current losses in the finger plate are removed. A gain of about 0.2% in the AEP has been estimated. Further, as a result of finger end plates, the stator obtained with present invention is characterized by lower costs and lower weight.

Advantageously, the wedge of the stator according to the present invention are formed in the shape of a "T".

According to a particular embodiment of the invention, the second portion is dimensioned in order to longitudinally abut against the first tooth, second tooth and a further third tooth, the third tooth being circumferentially adjacent to the first tooth or the second tooth. Advantageously, according to such embodiment, the wedge may be dimensioned in order to cover two adjacent slots.

According to further embodiments of the invention, the first portion is dimensioned in order to longitudinally extend from one to the other of the first tooth longitudinal end and the second tooth longitudinal end. Particularly, each wedge comprises at least a third portion transversally protruding from the first portion, the first portion and the third portion respectively abutting against the first tooth longitudinal end and the second tooth longitudinal end when the wedge is attached to one of the tooth radial ends.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a partial axonometric view of a stator for an electrical generator.
- Figure 2: shows another axonometric view of the stator of figure 1 included in an electrical generator.
- Figure 3: shows an axonometric view of a wedge for a stator.
- Figure 4: shows a partial axonometric view of an assembly including the stator of figure 1 and of the wedge of figure 3.
- Figure 5: shows a frontal axial view of the assembly of figure 4.
- Figure 6: shows a frontal axial view of an assembly including the stator of figure 1.
- Figure 7: shows a frontal axial view of an assembly including the stator of figure 1 and three other embodiments of wedges in accordance with the present invention.
- Figure 8: shows an axonometric view of a wedge for a stator.
- Figure 9: shows a partial axonometric view of an assembly including the stator of figure 1 and of the wedge of figure 8.

### Detailed Description

The illustrations in the drawings are schematic. It is noted that in different figures, similar or identical elements are provided with the same reference signs.

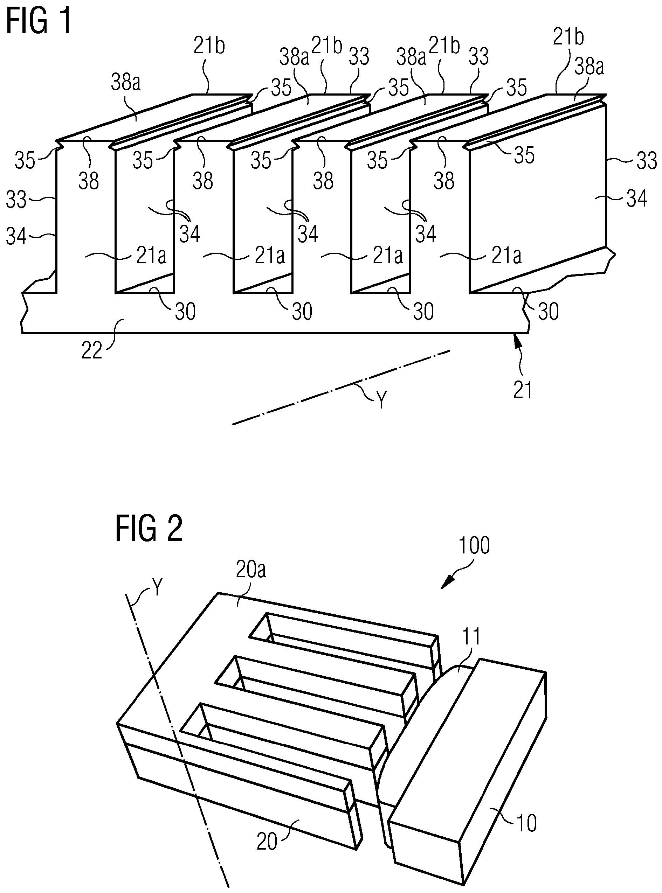

With reference to figure 1 to 9, a stator for an electrical generator 100 comprises a frame body 21 longitudinally extending along a longitudinal axis Y of the stator 20. The terms axial (or longitudinal) radial and circumferential in the following are made with reference to the longitudinal axis Y of the stator 20.

The electrical generator 100 further includes a rotor 10, radially external with respect the stator 20 and rotatable about the longitudinal axis Y. A permanent magnet 11 is attached to the rotor 10, radially interposed between the rotor 10 and the stator 20. The rotor 10 and the permanent magnet 11 are conventional and therefore not described in further detail.

The rotor 10 and the permanent magnet 11 are also not a specific part of the present invention. The present invention can be therefore adapted to electrical generators with or without permanent magnet or with a radially internal rotor.

The stator 20 has a conventional lamination structure including a stator yoke 22 and a plurality of teeth 33 protruding according to a radial direction orthogonal to the longitudinal axis Y from the stator yoke 22, up to respective tooth radial ends 38.

Each tooth 33 is delimited by two respective lateral surfaces 34, radially oriented, and by a respective circumferential surface 38a, at the respective tooth radial end 38, circumferentially connecting the two respective lateral surfaces 34.

Each tooth 33 extends longitudinally between a first tooth longitudinal end 21a and a second tooth longitudinal end 21b. With specific reference to Figure 2, the first tooth longitudinal end 21a and/or the second tooth longitudinal end 21b may be aligned along a radial direction with corresponding axial ends of the permanent magnet 11 and of the rotor 10 or, as shown in Figure 2, the stator 20 may include an axial lamination appendix 20a, axially extending with respect to the permanent magnet 11 and of the rotor 10.

The plurality of lateral surfaces 34 comprises, at respective tooth radial end 38, a plurality notch 35 for respectively attaching a plurality of wedges 40a-f of the stator 20, according to the different embodiment of the present invention, as specified in the following.

Optionally, vacuum pressure resin impregnation technique can be implemented to ensure that the wedges 40a-f are held rigidly in place in the respective notches 35.

The stator 20 further includes a plurality of slots 30, each slots being circumferential delimited by a pair of circumferentially adjacent teeth 33 and radially extending from the stator yoke 22 to a respective tooth radial end 38 and to at least one respective wedge 40a-f, as detailed in the following. Each slot 30 houses a respective winding 25. Each wedge 40 protects and keeps in place at least a respective winding 25.

According to other embodiments of the present invention (not shown) the wedges 40a-f are added in every other slot 30 or in any other order. According to further embodiments of the present invention (not shown) a combination of the wedges 40a-f of the present invention and of traditional wedges may be used.

According to all the embodiments of the present invention, each wedge 40a-f comprises at least a first portion 41 and a second portion 42a-f transversally protruding from the first portion 41. The first portion 41 and the second portion 42a-f are shaped and dimensioned in such a way that, when the wedge 40a-f is attached to one of the tooth radial ends 38, in particular at one or more wedge slots 35, the first portion 41 extends longitudinally from one of the first tooth longitudinal end 21a and the second tooth longitudinal end 21b towards the other of the first tooth longitudinal end 21a and the second tooth longitudinal end 21b and the second portion 42a-f abuts against said one of the first tooth longitudinal end 21a and the second tooth longitudinal end 21b.

In other words, the first portion 41 may extend longitudinally from the first tooth longitudinal end 21a towards the second tooth longitudinal end 21b and in this case the second portion 42a-f abuts against the first tooth longitudinal end 21a. Alternatively, the first portion 41 may extend longitudinally from the second tooth longitudinal end 21b towards the first tooth longitudinal end 21a and in this case the second portion 42a-f abuts against the second tooth longitudinal end 21b.

In embodiments where the axial lamination appendix 20a is present, the second portion 42a-f abuts in particular against axial lamination appendix 20a.

In other embodiments (not shown in the attached figures) the second portion 42a-f abuts against said one of the first tooth longitudinal end 21a and the second tooth longitudinal end 21b while one other one of the first tooth longitudinal end 21a and the second tooth longitudinal end 21b the stator 20 comprises a finger end plate.

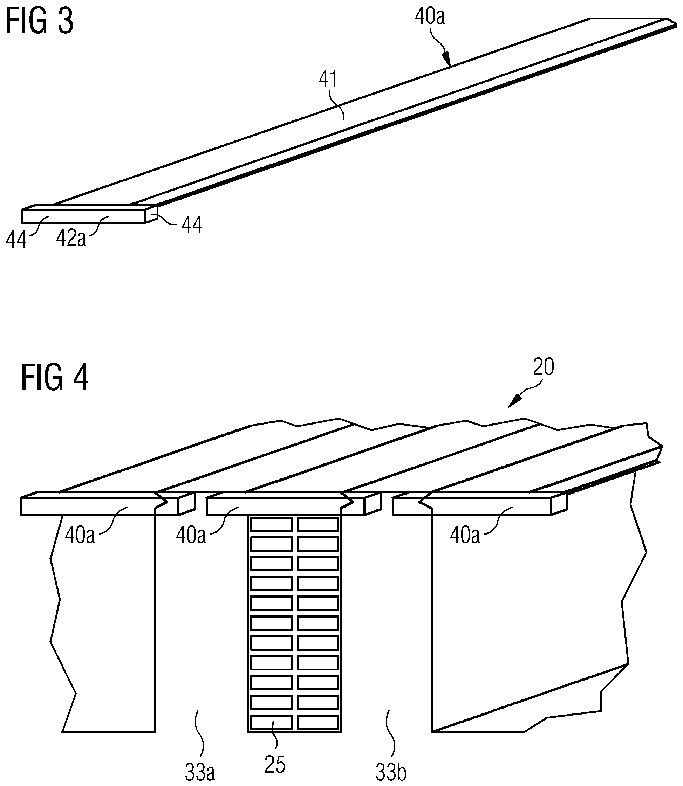

With specific reference to figures 3 to 5, the first portion 41 of the wedge 40a is dimensioned in order to circumferentially extend from a first tooth 33a of the plurality of teeth 33 to a second tooth 33b, circumferentially adjacent to the first tooth 33a. When coupled to the frame body 21, the first portion 41 is attached to two notches 35 of two respective lateral surfaces 34, respectively belonging to the first tooth 33a and the second tooth 33b.

The second portion 42a of the wedge 40a comprises two lateral wings 44, orthogonally protruding from the first portion 41 of the wedge 40a. When the wedge 40a is coupled to the frame body 21, the second portion 42a and the wings 44 are circumferentially oriented, in order that the wings 44 longitudinally abut against the first tooth longitudinal end 21a of the first tooth 33a and of the second tooth 33b, respectively.

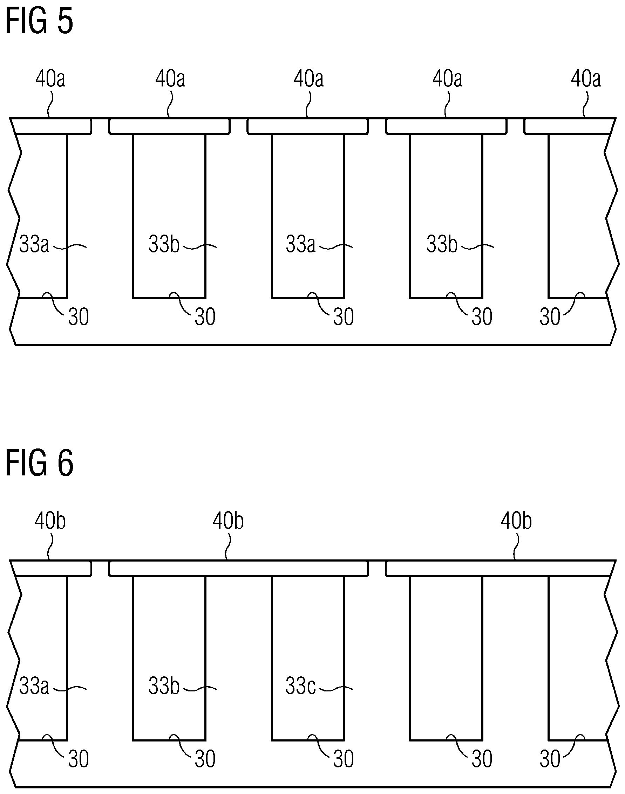

With specific reference to figure 6, the wedge 40b comprises two parallel first portions 41, respectively dimensioned in order to circumferentially extend from a first tooth 33a to a second tooth 33b, circumferentially adjacent to the first tooth 33a, and from the second tooth 33b to a third tooth 33c, circumferentially adjacent to the second tooth 33b. The second portion 42b is dimensioned in order to transversally connect the two parallel first portions 41 and to longitudinally abut against the first tooth longitudinal end 21a of the first tooth 33a, of the second tooth 33b and of a further third tooth 33c. The wedge 40b of the present second embodiment is equivalent to two wedges 40a of the figures 3 to 5. According to other embodiments of the present invention (not shown) the second portion 42b is dimensioned in order to transversally connect the two parallel first portions 41 and to longitudinally abut against more than three teeth 33, for example four teeth 33 or five teeth 33 or more.

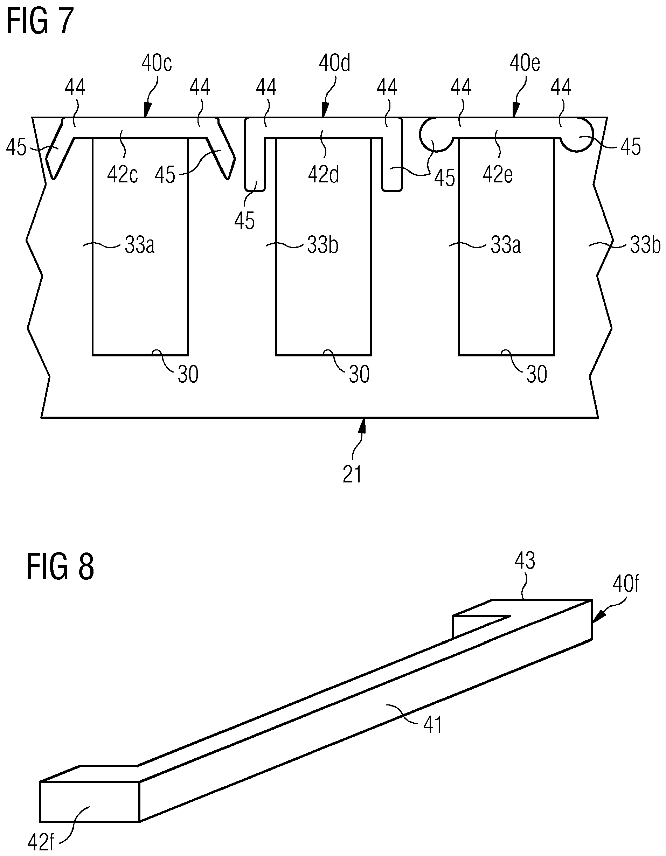

With specific reference to the three further embodiments of figure 7, in a respective embodiment the wedge 40c, 40d, 40e (at the left side, at the center and at the right side of figure 7) has an analogous structure of the wedges 40a of the first embodiment, where the respective second portion 42c, 42d, 42e further includes two further wings 45, respectively attached to each of the main wings 44, also abutting against the first tooth longitudinal end 21a of the first tooth 33a and of the second tooth 33b. The presence of the two further wings 45 increases the surface of contact between the respective second portion 42c, 42d, 42e and the coupling between the first tooth longitudinal end 21a of the first tooth 33a and of the second tooth 33b. In an embodiment, the wedge 40c includes two further wings 45, which are coplanar and inclined with respect to the main wings 44 of the respective second portion 42c. In a further embodiment, the wedge 40d includes two further wings 45, which are coplanar and orthogonally inclined with respect to the main wings 44 of the respective second portion 42d. In the further the embodiment the two further wings 45 are therefore radially oriented. In a further embodiment, the wedge 40e includes two further wings 45, which in the axial view of figure 7 have a circular profile.

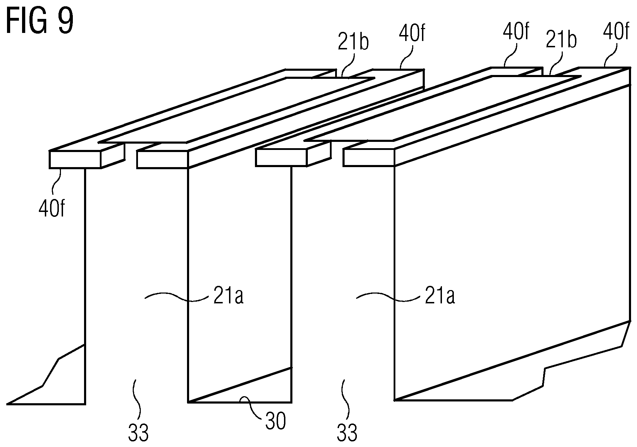

With specific reference to figures 8 and 9, the wedge 40f is shaped in the form of clamps. The first portion 41 of the wedge 40f is dimensioned in order to longitudinally extend from one to the other of the first tooth longitudinal end 21a and the second tooth longitudinal end 21b. When coupled to the frame body 21, the first portion 41 is attached to only one notch 35 of respective lateral surfaces 34 of a respective tooth 33. Each wedge 40f comprises a second portion 42f protruding from the first portion 41 as a single wing 44. Each wedge 40f comprises also a third portion 43 transversally protruding from the first portion 41 as a single wing 44 and longitudinally opposite to the second portion 42f. When the wedge 40f is attached to one respective the tooth radial ends 38, a second portion 42f and the third portion 43 respectively abuts against the first tooth longitudinal end 21a and the second tooth longitudinal end 21b of a respective tooth 33. For each tooth 33, as shown in figure 9, two wedges 40f are symmetrically provided at each lateral surface 34 for clamping the tooth 33 from opposite sides.

## Claims

1. Wedge (40a-f) for a stator (20) comprising a plurality of teeth (33) of an electrical generator comprising at least a first portion (41) and a second portion (42a-f) transversally protruding from the first portion (41), the first portion (41) and the second portion (42a-f) being shaped and dimensioned in such a way that, when the wedge (40a-f) is attached to a tooth radial end (38) of the stator (20), the first portion (41) extends longitudinally from one of a first tooth longitudinal end (21a) and a second tooth longitudinal end (21b) towards the other of the first tooth longitudinal end (21a) and the second tooth longitudinal end (21b) and the second portion (42a-f) abuts against said one of a first tooth longitudinal end (21a) and a second tooth longitudinal end (21b), the first portion (41) being dimensioned in order to circumferentially extend from a first tooth (33a) of the plurality of teeth (33) to a second tooth (33b) of the plurality of teeth (33), the first tooth (33a) and the second tooth (33b) being circumferentially adjacent, and the second portion (42a) being dimensioned in order to longitudinally abut against both the first tooth (33a) and the second tooth (33b),
**characterized in that** the second portion (42a-e) comprises two main wings (44) for respectively abutting against the first tooth (33a) and the second tooth (33b), and the second portion (42a-e) comprises two further wings (45), respectively attached to each of the main wings (44), for respectively abutting against the first tooth (33a) and the second tooth (33b).

2. Stator (20) for an electrical generator comprising:
- a frame body (21) longitudinally extending along a longitudinal axis (Y) of the stator (20) and including a stator yoke (22) and a plurality of teeth (33) protruding according to a radial direction orthogonal to the longitudinal axis (Y) from the stator yoke (22) to respective tooth radial ends (38), each tooth extending longitudinally between a first tooth longitudinal end (21a) and a second tooth longitudinal end (21b),
- at least a wedge (40a-f) according to claim 1.

3. Stator (20) as claimed in claim 2, wherein the second portion (42b) is dimensioned in order to longitudinally abut against the first tooth (33a), second tooth (33b) and at least a further third tooth (33c), the third tooth (33c) being circumferentially adjacent to the first tooth (33a) or the second tooth (33b).

4. Stator (20) as claimed in claim 2 or 3, wherein the first portion (41) is dimensioned in order to longitudinally extend from one to the other of the first tooth longitudinal end (21a) and the second tooth longitudinal end (21b).

5. Stator (20) as claimed in any of the previous claims, wherein the stator (20) further includes at least an axial lamination appendix (20a), the second portion (42a-f) abutting against the axial lamination appendix (20a).

6. Stator (20) as claimed in any of the previous claims, wherein the second portion (42a-f) abuts against said one of the first tooth longitudinal end (21a) and the second tooth longitudinal end (21b) and the stator (20) comprises a finger end plate at the other of the first tooth longitudinal end (21a) and the second tooth longitudinal end (21b).

7. Stator (20) as claimed in any of the previous claims, wherein vacuum pressure resin impregnation technique is used to ensure that the wedge (40a-f) is held in place in the respective notches (35).

## Patentansprüche

1. Keil (40a-f) für einen Stator (20), der eine Vielzahl von Zähnen (33) eines elektrischen Generators umfasst, umfassend mindestens einen ersten Abschnitt (41) und einen zweiten Abschnitt (42a-f), der quer vom ersten Abschnitt (41) absteht, wobei der erste Abschnitt (41) und der zweite Abschnitt (42a-f) so geformt und bemessen sind, dass, wenn der Keil (40a-f) an einem radialen Zahnende (38) des Stators (20) angebracht ist, der erste Abschnitt (41) sich in Längsrichtung von einem ersten Zahnende (21a) oder einem zweiten Zahnende (21b) zu dem jeweils anderen Zahnende (21a, 21b) erstreckt und der zweite Abschnitt (42a-f) an dem einen der Zahnenden (21a, 21b) anliegt, wobei der erste Abschnitt (41) so bemessen ist, dass er sich in Umfangsrichtung von einem ersten Zahn (33a) der Vielzahl von Zähnen (33) zu einem zweiten Zahn (33b) der Vielzahl von Zähnen (33) erstreckt, wobei der erste Zahn (33a) und der zweite Zahn (33b) in Umfangsrichtung benachbart sind, und der zweite Abschnitt (42a) so bemessen ist, dass er in Längsrichtung sowohl an dem ersten Zahn (33a) als auch an dem zweiten Zahn (33b) anliegt,
**dadurch gekennzeichnet, dass** der zweite Abschnitt (42a-e) zwei Hauptflügel (44) umfasst, die jeweils zum Anliegen an den ersten Zahn (33a) und den zweiten Zahn (33b) vorgesehen sind, und dass der zweite Abschnitt (42a-e) zwei weitere Flügel (45) umfasst, die jeweils an jedem der Hauptflügel (44) angebracht sind, um jeweils an den ersten Zahn (33a) und den zweiten Zahn (33b) anzuliegen.

2. Stator (20) für einen elektrischen Generator, umfassend:
- einen Rahmenkörper (21), der sich in Längsrichtung entlang einer Längsachse (Y) des Stators (20) erstreckt und ein Statorjoch (22) sowie eine Vielzahl von Zähnen (33) umfasst, die gemäß einer radialen Richtung, die orthogonal zur Längsachse (Y) ist, vom Statorjoch (22) zu jeweiligen radialen Zahnenden (38) vorstehen, wobei sich jeder Zahn in Längsrichtung zwischen einem ersten Zahnlängsende (21a) und einem zweiten Zahnlängsende (21b) erstreckt,
- mindestens einen Keil (40a-f) nach Anspruch 1.

3. Stator (20) nach Anspruch 2, wobei der zweite Abschnitt (42b) so bemessen ist, dass er in Längsrichtung an dem ersten Zahn (33a), dem zweiten Zahn (33b) und mindestens einem weiteren, dritten Zahn (33c) anliegt, wobei der dritte Zahn (33c) in Umfangsrichtung an den ersten Zahn (33a) oder den zweiten Zahn (33b) angrenzt.

4. Stator (20) nach Anspruch 2 oder 3, wobei der erste Abschnitt (41) so bemessen ist, dass er sich in Längsrichtung von einem zum anderen des ersten Zahnlängsendes (21a) und des zweiten Zahnlängsendes (21b) erstreckt.

5. Stator (20) nach einem der vorhergehenden Ansprüche, wobei der Stator (20) ferner mindestens einen axialen Laminierungsanhang (20a) umfasst, wobei der zweite Abschnitt (42a-f) an dem axialen Laminierungsanhang (20a) anliegt.

6. Stator (20) nach einem der vorhergehenden Ansprüche, wobei der zweite Abschnitt (42a-f) an dem ersten Zahnlängsende (21a) oder dem zweiten Zahnlängsende (21b) anliegt und der Stator (20) eine Fingerendplatte an dem anderen des ersten Zahnlängsendes (21a) und des zweiten Zahnlängsendes (21b) umfasst.

7. Stator (20) nach einem der vorhergehenden Ansprüche, wobei eine Vakuumdruckharzimprägnierungstechnik verwendet wird, um sicherzustellen, dass der Keil (40a-f) in den jeweiligen Kerben (35) gehalten wird.

## Revendications

1. Cale (40a-f) pour un stator (20) comprenant une pluralité de dents (33) d'un générateur électrique comprenant au moins une première partie (41) et une seconde partie (42a-f) dépassant transversalement de la première partie (41), la première partie (41) et la seconde partie (42a-f) étant conformées et dimensionnées de telle sorte que, lorsque la cale (40a-f) est fixée à une extrémité radiale de dent (38) du stator (20), la première partie (41) s'étend longitudinalement depuis l'une d'une première extrémité longitudinale de dent (21a) et d'une seconde extrémité longitudinale de dent (21b) vers l'autre de la première extrémité longitudinale de dent (21a) et de la seconde extrémité longitudinale de dent (21b), et la seconde partie (42a-f) vient en butée contre ladite extrémité d'une première extrémité longitudinale de dent (21a) et d'une seconde extrémité longitudinale de dent (21b), la première partie (41) étant dimensionnée afin de s'étendre circonférentiellement depuis une première dent (33a) de la pluralité de dents (33) jusqu'à une deuxième dent (33b) de la pluralité de dents (33), la première dent (33a) et la deuxième dent (33b) étant adjacentes circonférentiellement, et la seconde partie (42a) étant dimensionnée afin de venir en butée longitudinalement à la fois contre la première dent (33a) et la deuxième dent (33b),
**caractérisée en ce que** la seconde partie (42a-e) comprend deux ailes principales (44) destinées à venir en butée respectivement contre la première dent (33a) et la deuxième dent (33b), et la seconde partie (42a-e) comprend deux autres ailes (45), fixées respectivement à chacune des ailes principales (44), destinées à venir en butée respectivement contre la première dent (33a) et la deuxième dent (33b).

2. Stator (20) pour un générateur électrique comprenant :
- un corps de cadre (21) s'étendant longitudinalement le long d'un axe longitudinal (Y) du stator (20) et comprenant une culasse de stator (22) et une pluralité de dents (33) dépassant selon une direction radiale orthogonale à l'axe longitudinal (Y) depuis la culasse de stator (22) jusqu'aux extrémités radiales de dent (38) respectives, chaque dent s'étendant longitudinalement entre une première extrémité longitudinale de dent (21a) et une seconde extrémité longitudinale de dent (21b),
- au moins une cale (40a-f) selon la revendication 1.

3. Stator (20) selon la revendication 2, dans lequel la seconde partie (42b) est dimensionnée afin de venir en butée longitudinalement contre la première dent (33a), la deuxième dent (33b) et au moins une troisième dent (33c) supplémentaire, la troisième dent (33c) étant adjacente circonférentiellement à la première dent (33a) ou à la deuxième dent (33b).

4. Stator (20) selon la revendication 2 ou 3, dans lequel la première partie (41) est dimensionnée afin de s'étendre longitudinalement de l'une à l'autre de la première extrémité longitudinale de dent (21a) et de la seconde extrémité longitudinale de dent (21b).

5. Stator (20) selon l'une quelconque des revendications précédentes, dans lequel le stator (20) comprend en outre au moins un appendice de stratification axial (20a), la seconde partie (42a-f) venant en butée contre l'appendice de stratification axial (20a).

6. Stator (20) selon l'une quelconque des revendications précédentes, dans lequel la seconde partie (42a-f) vient en butée contre ladite extrémité parmi la première extrémité longitudinale de dent (21a) et la seconde extrémité longitudinale de dent (21b), et le stator (20) comprend une plaque d'extrémité à doigt à l'autre extrémité parmi la première extrémité longitudinale de dent (21a) et la seconde extrémité longitudinale de dent (21b).

7. Stator (20) selon l'une quelconque des revendications précédentes, dans lequel une technique d'imprégnation de résine sous vide est utilisée pour garantir que la cale (40a-f) est maintenue en place dans les encoches (35) respectives.
